# EUROPÄISCHE PATENTSCHRIFT

(11) **EP 0 956 994 B1**
(45) Veröffentlichungstag und Bekanntmachung des Hinweises auf die Patenterteilung: **28.09.2005**
(21) Anmeldenummer: 99107709.0
(22) Anmeldetag: 17.04.1999
(51) Int. Cl.: B60N 2/38

(54) **Fahrzeugsitz**
Vehicle seat
Siège de véhicule

(30) Priorität: 09.05.1998 DE 19820880
(43) Veröffentlichungstag der Anmeldung: 17.11.1999
(73) Patentinhaber: DaimlerChrysler AG, 70567 Stuttgart (DE)
(72) Erfinder: Walter, Timo, 76593 Gersnbach (DE)

(56) Entgegenhaltungen:
- EP-A- 0 286 038
- DE-U- 6 751 026
- FR-A- 2 752 207
- FR-A- 2 753 940
- US-A- 5 292 174
- US-A- 5 667 272
- US-A- 5 713 633

## Beschreibung

Die Erfindung betrifft einen Fahrzeugsitz, insbesondere für ein Fahrerhaus von Nutzkraftfahrzeugen, der im Oberbegriff des Patentanspruchs 1 angegebenen Gattung.

In Fahrerhäusern oder -kabinen von Nutzfahrzeugen werden zur besseren Nutzung des relativ beengten Raums mindestens einem Sitz durch dessen Umbau weiteren Funktionen zugewiesen, z.B. Ablagetisch oder Tritt, um in die über den Sitzen angeordneten Schlafliegen zu gelangen.

Bei einem bekannten Fahrzeugsitz dieser Art (DE 67 51 026 U1), der in einem Fahrerhaus eines Nutzfahrzeugs zwischen dem Fahrer- und Beifahrersitz angeordnet ist, ist die Gebrauchsfläche auf der Rückseite der Rückenlehne als Tischplatte ausgebildet, die nach Aufklappen der Rückenlehne auf das Sitzkissen horizontal ausgerichtet ist.

Bei einem Fahrerhaus für Kraftfahrzeuge (DE 37 11 001 A1) ist es bekannt, eine im Tunnelbereich zwischen Fahrer- und Beifahrersitz angeordnete Ablage als Aufstiegshilfe für eine hintere, obere Fahrerhausliege auszubilden. Hierzu ist ein fertiges Tischelement aus einer in Fahrzeuglängsrichtung hinten gelegenen tiefen, im wesentlichen horizontalen Lage in eine vordere, im wesentlichen horizontale Hochlage verstellbar, in der es sich auf der vorderen Fahrerhausbrüstung abstützt.

Der Erfindung liegt die Aufgabe zugrunde, einen Sitz der eingangs genannten Art mit Mehrzweckfunktion so auszugestalten, daß die Gebrauchsfläche wählbare Lagen mit unterschiedlichen Höhenniveau zur Berücksichtigung von verschiedenen Körpergrößen von Fahrer und Beifahrer bietet.

Die Aufgabe ist erfindungsgemäß durch die Merkmale im Patentanspruch 1 gelöst.

Der erfindungsgemäße Fahrzeugsitz hat den Vorteil, daß er durch Umklappen der Rückenlehne oder durch Ausklappen des Lehnenpolsters aus der Rückenlehne heraus alternativ zwei Gebrauchsflächen mit unterschiedlichem Höhenniveau anbietet. Dabei kann durch entsprechende Gestaltung dafür gesorgt werden, daß z.B. das eine Niveau auf die Körpermaße einer 5%-Frau (1,54 m) und das andere Niveau auf die Körpergröße eines 95%-Mannes (1,92 m) abgestimmt ist, und zwar sowohl bei Verwendung der Gebrauchsfläche als Tisch- oder Ablageplatte oder bei Verwendung der Gebrauchsfläche als Trittbrett oder Aufstiegshilfe.

Vorteilhafte Ausführungsformen des erfindungsgemäßen Fahrzeugsitzes mit zweckmäßigen Ausgestaltungen und Weiterbildungen der Erfindung ergeben sich aus den weiteren Ansprüchen.

Gemäß einer bevorzugten Ausführungsform der Erfindung ist die zweite Gebrauchsfläche auf der Rückseite des Lehnenpolsters aus einem Mittelteil und zwei seitlich angesetzten, bei Nichtgebrauch auf das Mittelteil aufklappbaren Seitenteilen zusammengesetzt. Bei dieser konstruktiven Ausgestaltung kann durch Ausklappen der Seitenteile eine Gebrauchfläche zur Verfügung gestellt werden, die die gesamte Sitzkissenoberfläche überdeckt und ggf. noch darüber hinausragt.

Gemäß einer vorteilhaften Ausführungsform der Erfindung sind dabei die Seitenteile an den in Sitztiefe sich erstreckenden Längskanten des Mittelteils angelenkt und am Sitzkissen Abstützelemente für die vom Mittelteil ausgeklappten Seitenteile vorgesehen. Hierdurch erhält man eine recht stabile Trittfläche, die zusätzlich noch starr und ohne polsterbedingtem Einfederungsweg dadurch festgelegt wird, daß gemäß einer vorteilhaften Ausführungsform der Erfindung das Lehnenpolster an der Sitzschale oder dem Sitzgestell des Sitzkissens abgestützt wird, die oder das das Sitzpolster des Sitzkissens trägt.

Die Erfindung ist anhand eines in der Zeichnung dargestellten Ausführungsbeispiels im folgenden näher beschrieben. Es zeigen:
- Fig. 1: eine perspektivische Ansicht eines Fahrzeugsitzes für eine Fahrerkabine eines Nutzfahrzeugs,
- Fig. 2 und 3: jeweils eine gleiche Darstellung wie in Fig. 1 in zwei verschiedenen Zwischenpositionen zur Umrüstung des Fahrzeugsitzes zu einer Gebrauchsfläche,
- Fig. 4: eine gleiche Darstellung wie in Fig. 1 des zu einer auf niedrigem Niveau liegenden Gebrauchsfäche umgerüsteten Fahrzeugsitzes,
- Fig. 5: eine gleiche Darstellung wie in Fig. 1 des zu einer auf höherem Niveau liegenden Gebrauchsfläche umgerüsteten Fahrzeugsitzes.

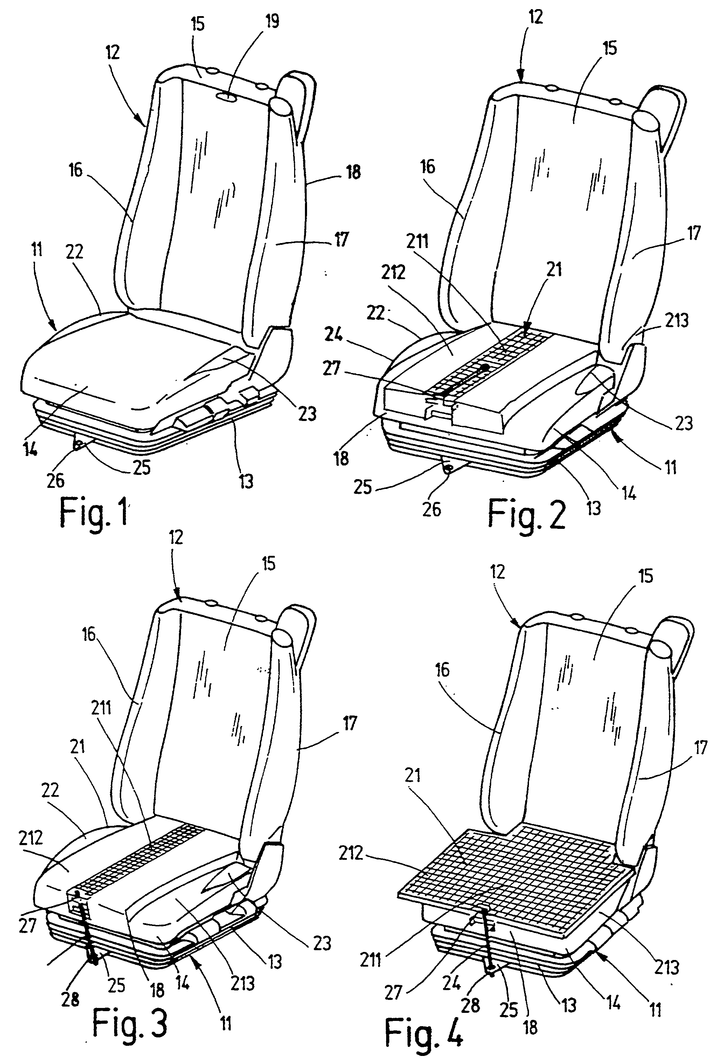

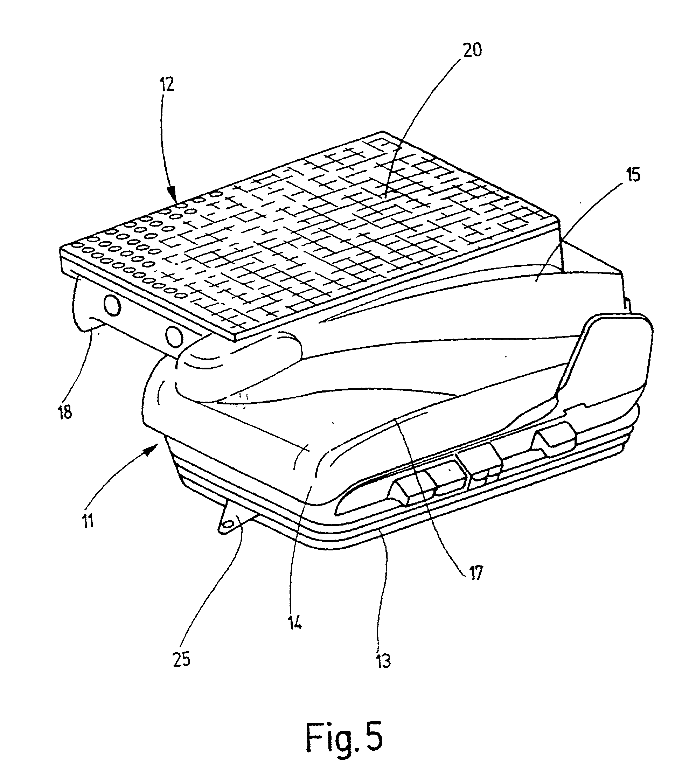

Der in Fig. 1 perspektivisch dargestelllte Fahrzeugsitz für ein Fahrerhaus oder eine Fahrerkabine von Nutzfahrzeugen weist ein Sitzkissen 11 und eine auf das Sitzkissen 11 aufklappbare Rückenlehne 12 auf, die um eine in Richtung Sitzbreite sich erstreckende Schwenkachse schwenkbar am Sitzkissen 11 gehalten ist. Das Sitzkissen 11 setzt sich zusammen aus einem Sitzuntergestell, das hier als Sitzschale 13 ausgebildet ist, und aus einem von der Sitzschale 13 aufgenommenen Sitzpolster 14. Die Rückenlehne 12 setzt sich zusammen aus einer Lehnenschale 15, an der seitliche Stützwangen 16,17 angeformt sind, und aus einem Lehnenpolster 18, das zwischen den Stützwangen 16,17 einliegt und die gesamte Vorderfläche der Rückenlehne 12 abdeckt. Wie aus Fig. 2 und 3 ersichtlich ist, ist das Lehnenpolster 18 aus der Rückenlehne 12 aus- und auf das Sitzpolster 14 des Sitzkissens 11 aufklappbar, wozu es an seiner Unterseite eine hier nicht dargestellte Schwenkachse aufweist, die in der Lehnenschale 15 aufgenommen und parallel zur Schwenkachse der Rückenlehne 12 ausgerichtet ist. Auf der Rückseite der Lehnenschale 15 ist - wie dies in Fig. 5 zu sehen ist - eine erste Gebrauchsfläche 20 und auf der Rückseite des Lehnenpolsters 18 - wie dies in Fig. 4 zu sehen ist - eine zweite Gebrauchsfläche 21 angeordnet. Die zweite Gebrauchsfläche 21 ist aus einem Mittelteil 211 und zwei Seitenteilen 212,213 zusammengesetzt, die an den in Sitztiefe sich erstreckenden Seitenkanten des Mittelteils 211 klappbar so angelenkt sind, daß sie auf das Mittelteil 211 aufgelegt werden können (vgl. Fig. 3). Das Mittelteil 211 ist dabei so groß bemessen, daß es das Lehnenpolster 18 rückseitig vollständig abdeckt. Die Seitenteile 212 und 213 sind so bemessen, daß sie zusammen mit dem Mittelteil 211 eine Flächenbreite ergeben, die der Breite der Lehnenschale 15 entspricht. Da die erste Gebrauchsfläche 20 die Rückseite der Lehnenschale 16 ganzflächig überdeckt, ist die zweite Gebrauchsfläche 21 mit vom Mittelteil 211 abgeklappten Seitenteile 212,213 etwa gleich groß wie die erste Gebrauchsfläche 20. Zur Abstützung der beiden Seitenteile 212,213 sind am Sitzkissen Abstützelemente 22,23 vorhanden, die an oder nahe den in Sitztiefe sich erstreckenden Längsrändern des Sitzkissens 11 angeordnet sind. Um das in der Lehnenschale 15 schwenkbar gehaltene Lehnenpolster 18 in Sitzgebrauchsstellung an der Lehnenschale 15 festzulegen, ist an dem von der Schwenkachse abgekehrten oberen Ende von Lehnenpolster 18 und Lehnenschale 15 eine manuell zu betätigende Verriegelung 19 (Fig. 1) vorgesehen.

In Fig. 1 ist der vorzugsweise in der Fahrerkabine zwischen dem Fahrer- und Beifahrersitz angeordnete Sitz in seiner Gebrauchsstellung dargestellt, in dem er von einem Mitfahrer genutzt werden kann. Soll hingegen der Sitz als Tisch- oder Ablageplatte oder als Aufstiegshilfe mit einer auf niedrigem Niveau liegenden Tischplatte oder Trittfläche genutzt werden, so ist die Verriegelung 12 des Lehnenpolsters 18 zu lösen und dann das Lehnenpolster 18 auf das Sitzpolster 14 des Sitzkissens 11 aufzuklappen (Fig. 2).

Um die störende Fähigkeit der aufeinanderliegenden Polster 14,18 zum Einfedern zu kompensieren, wird das Lehnenpolster 18 mittels eines Stützstabes 24 (Fig. 3 und 4) an der Sitzschale 13 abgestützt. Hierzu ist an der Vorderkante der Sitzschale 15 eine Haltelasche 25 mit einem Einsteckloch 26 angeordnet und der Stützstab 24 mittels eines Gelenks 27 an der Oberkante des Lehnenpolsters 18 bzw. an der Vorderkante des Mittelteils 211 der zweiten Gebrauchsfläche 21 so festgelegt, daß er innerhalb eines von den Seitenteilen 212,213 freigegebenen Zwischenraums auf das Mittelteil 211 aufgelegt werden kann, wie dies in Fig. 2 zu sehen ist. Zur Herstellung der Abstützung des Lehnenpolsters 18 an der Lehnenschale 15 wird der Stützstab 24 nach vorn geschwenkt und in das Einsteckloch 26 eingesteckt, wo er sich mit einem Ringflansch 28 an der Haltelasche 25 abstützt. Wird der Ringflansch 28 als Mutter ausgebildet, die auf einem am Stützstabende 24 aufgeschnittenen Gewinde aufschraubbar ist, so läßt sich die Stützlänge des Stützstabes 24 individuell einstellen.

Ist nunmehr das Lehnenpolster 18 an der Lehnenschale 15 abgestützt, so werden die beiden auf dem Mittelteil 211 aufliegenden Seitenteile 212,213 nach außen weggeschwenkt und liegen auf den Abstützelementen 22,23 auf. Die nunmehr in ihrer vollständigen Größe freigelegte Gebrauchsfläche 21 kann als Ablagefläche, als Tischplatte oder als Trittbrett zum Aufstieg zu einer oberhalb der Sitze angeordneten Fahrerliege verwendet werden.

Die Zurückverwandlung des Sitzes für den Sitzgebrauch gemäß Fig. 1 erfolgt in umgekehrter Reihenfolge, wozu zunächst die beiden Seitenteile 212,213 auf das Mittelteil 211 aufgeklappt werden und der Stützstab 14 aus dem Einsteckloch 26 herausgezogen und in den Zwischenraum zwischen den beiden aufgeklappten Seitenteilen 212,213 auf das Mittelteil 211 aufgelegt wird. Danach wird das Lehnenpolster 18 wieder hochgeschwenkt und mittels der Verriegelung 19 an der Lehnenschale 15 arretiert.

Wird eine höherliegende Tischplatte, Ablagefläche oder Trittfläche gewünscht, so wird - wie dies in Fig. 5 dargestellt ist - die gesamte Rückenlehne 12 auf das Sitzkissen 11 aufgeschwenkt, wodurch die auf der Rückseite der Lehnenschale 15 angeordnete erste Gebrauchsfläche 20 in eine etwa horizontale Ausrichtung gelangt.

## Patentansprüche

1. Fahrzeugsitz, insbesondere für ein Fahrerhaus von Nutzkraftfahrzeugen, mit einem Sitzkissen (11) und einer auf das Sitzkissen (11) aufklappbaren, ein Lehnenpolster (18) aufweisenden Rückenlehne (12), auf deren vom Lehnenpolster (18) abgekehrten Rückseite eine nach Aufklappen der Rückenlehne (12) auf das Sitzkissen (11) nutzbare Gebrauchsfläche (20) angeordnet ist,
**dadurch gekennzeichnet,**
**daß** das Lehnenpolster (18) aus der Rückenlehne (12) aus- und auf das Sitzkissen (11) aufklappbar ausgebildet ist und daß auf der Rückseite des Lehnenpolsters (18) eine nach Aufklappen des Lehnenpolsters (18) auf das Sitzkissen (11) nutzbare zweite Gebrauchfläche (21) angeordnet ist.

2. Sitz nach Anspruch 1
**dadurch gekennzeichnet,**
**daß** die zweite Gebrauchsfläche (21) aus einem Mittelteil (211) und zwei seitlich angesetzten, bei Nichtgebrauch auf das Mittelteil (11) aufklappbaren Seitenteilen (212,213) zusammengesetzt ist.

3. Sitz nach Anspruch 2,
**dadurch gekennzeichnet,**
**daß** die Seitenteile (212,213) an den in Sitztiefe sich erstreckenden Längskanten des Mittelteils (211) angelenkt sind und daß am Sitzkissen (11) Abstützelemente (22,23) für die vom Mittelteil (211) weggeklappten Seitenteile (212,213) vorgesehen sind.

4. Sitz nach Anspruch 3,
**dadurch gekennzeichnet,**
**daß** jeweils mindestens ein Abstützelement (22,23) an oder nahe den in Sitztiefe sich erstreckenden Längsrändern des Sitzkissens (11) angeordnet ist.

5. Sitz nach einem der Ansprüche 1 - 4,
**dadurch gekennzeichnet,**
**daß** die Rückenlehne (12) eine Lehnenschale (15) aufweist, in der das Lehnenpolster (18) schwenkbar gehalten ist.

6. Sitz nach Anspruch 5,
**dadurch gekennzeichnet,**
**daß** das Lehnenpolster (18) an seinem von der Schwenkachse abgekehrten oberen Ende an der Lehnenschale (15) lösbar verriegelt ist.

7. Sitz nach Anspruch 5 oder 6,
**dadurch gekennzeichnet,**
**daß** an der Lehnenschale (15) seitlich über das Lehnenpolster vorstehende, vorzugsweise gepolsterte Stützwangen (16,17) ausgebildet sind, die das im wesentlichen rechteckförmig ausgebildete Lehnenpolster (18) beidseitig begrenzen.

8. Sitz nach einem der Ansprüche 1 - 7,
**dadurch gekennzeichnet,**
**daß** das Sitzkissen (11) ein Sitzpolster (14) und eine das Sitzpolster (14) aufnehmdne Sitzschale (13) oder Untergestell aufweist und daß das auf das Sitzpolster (14) aufgeklappte Lehnenpolster (18) an der Sitzschale (13) oder am Untergestell abgestützt ist.

9. Sitz nach Anspruch 8,
**dadurch gekennzeichnet,**
**daß** die Abstützung mittels eines Stützstabs (24) vorgenommen ist, der an der Oberkante des Lehnenpolsters (18) bzw. an der Vorderkante der zweiten Gebrauchsfläche (21) auf die zweite Gebrauchsfläche (21) aufklappbar angelenkt ist und nach Abschwenken der zweiten Gebrauchsfläche (21) an der Vorderkante des Sitzschale (13) oder des Untergestells festsetzbar ist.

10. Sitz nach einem der Ansprüche 1 - 9,
**dadurch gekennzeichnet,**
**daß** die beiden Gebrauchsflächen (20,21) als Tischplatten, Ablageplatten und/oder Trittbretter ausgebildet sind.

## Claims

1. Vehicle seat, in particular for a driver's cab of utility vehicles, having a seat cushion (11) and a backrest (12) which can folded onto the seat cushion (11), which backrest (12) has a support padding (18) and on the rear side of which backrest (12) facing away from the support padding (18) there is an area of use (20) which can be used after the backrest (12) has been folded onto the seat cushion (11),
**characterised in that** the support padding (18) is formed in such a way that it can be folded out of the backrest (12) and onto the seat cushion (11) and that on the rear side of the support padding (18) there is a second area of use (21) which can be used after the support padding (18) has been folded onto the seat cushion (11).

2. Vehicle seat according to claim 1,
**characterised in that**
the second area of use (21) comprises a middle part (211) and two laterally arranged side parts (212, 213) which can be folded onto the middle part when not in use.

3. Seat according to claim 2,
**characterised in that**
the side parts (212, 213) are connected to the longitudinal edges of the middle part (211) extending into the depth of the seat and **in that** support elements are provided on the seat cushion (11) for the side parts (212, 213) folded away from the middle part (211).

4. Seat according to claim 3,
**characterised in that**
at least one support element (22, 23) is arranged on or near the longitudinal edges of the seat cushion (11) extending into the depth of the seat.

5. Seat according to one of the claims 1 - 4,
**characterised in that**
the backrest (12) has a support shell (14) in which the support padding (18) is pivotally held.

6. Seat according to claim 5,
**characterised in that**
the support padding (18) is secured at its upper end facing away from the pivot axis to the support shell (15) in a releasable way.

7. Seat according to claim 5 or 6,
**characterised in that**
preferably padded support plates (16, 17) are formed on the support shell (15) projecting laterally over the support padding, which support plates (16, 17) delimit on both sides essentially rectangularly formed support paddings (18).

8. Seat according to one of the claims 1 - 7,
**characterised in that**
the seat cushion (1) has a seat padding (14) and a seat shell (13) or lower frame receiving the seat padding (14) and **in that** the support padding (18) folded onto the seat padding (14) is supported on the seat shell (13) or on the lower frame.

9. Seat according to claim 8,
**characterised in that**
the support is effected by means of a support rod (24) which is connected to the upper edge of the support padding (18) or to the front edge of the second area of use (21) so that it can be folded onto the second area of use (21) and after pivoting away of the second area of use (21) can be fixed on the front edge of the seat shell (13) or the lower frame.

10. Seat according to one of the claims 1 - 9,
**characterised in that**
the two areas of use (20, 21) are formed as table plates, console plates and / or steps.

## Revendications

1. Siège de véhicule, en particulier pour une cabine de conduite de véhicules utilitaires, comprenant un coussin de siège (11) et un dossier (12) rabattable sur le coussin de siège (11) et présentant un rembourrage de dossier (18)sur la face arrière opposée au rembourrage de dossier (18) duquel est disposée une surface utile (20) utilisable après avoir rabattu le dossier (12) sur le coussin de siège (11), **caractérisé en ce que** le rembourrage de dossier (18) peut être rabattu depuis le dossier (12) depuis et sur le coussin de siège (11), et une deuxième surface utile (21) est disposée sur la face arrière du rembourrage de dossier (18) utilisable après avoir rabattu le rembourrage de dossier (18) sur le coussin de siège (11).

2. Siège selon la revendication 1, **caractérisé en ce que** la deuxième surface utile (21) est composée d'une partie centrale (211) et de deux parties latérales (212, 213) disposées latéralement et pouvant être rabattues sur la partie centrale (11) en cas de non utilisation.

3. Siège selon la revendication 2, **caractérisé en ce que** les parties latérales (212, 213) sont articulées sur les arêtes longitudinales de la partie centrale (211) s'étendant dans la profondeur du siège, et des éléments d'appui (22, 23) sont prévus sur le coussin de siège (11) pour les parties latérales (212, 213) retirées de la partie centrale (211).

4. Siège selon la revendication 3, **caractérisé en ce qu'**au moins un élément d'appui (22, 23) est disposé au niveau ou près des arêtes longitudinales du coussin de siège (11) s'étendant dans la profondeur du siège.

5. Siège selon l'une quelconque des revendications 1 à 4, **caractérisé en ce que** le dossier (12) présente une coque de dossier (15) dans laquelle le rembourrage de dossier (18) est maintenu en pivotement.

6. Siège selon la revendication 5, **caractérisé en ce que** le rembourrage de dossier (18) est verrouillé de manière amovible sur la coque de dossier (15) au niveau de son extrémité supérieure opposée à l'axe de pivotement.

7. Siège selon la revendication 5 ou 6, **caractérisé en ce que** des joues d'appui (16, 17) de préférence rembourrées sont prévues sur la coque de dossier (15) saillant latéralement du rembourrage de dossier (18), qui délimitent le rembourrage de dossier (18) pour l'essentiel rectangulaire.

8. Siège selon l'une quelconque des revendications 1 à 7, **caractérisé en ce que** le coussin de siège (11) présente un rembourrage de siège (14) et une coque de siège (13) ou sous-structure recevant le rembourrage de siège (14), et le rembourrage de dossier (18) rabattu sur le rembourrage de siège (14) est appuyé sur la coque de siège (13) ou sous-structure.

9. Siège selon la revendication 8, **caractérisé en ce que** l'appui est réalisé au moyen d'une barre d'appui (24) qui est articulée sur l'arête supérieure du rembourrage de dossier (18) ou l'arête avant de la deuxième surface utile (21) de manière rabattable sur la deuxième surface utile (21) et peut être immobilisée sur l'arête avant de la coque de siège (13) ou de la sous-structure après le pivotement de la deuxième surface utile (21).

10. Siège selon l'une quelconque des revendications 1 à 9, **caractérisé en ce que** les deux surfaces utiles (20, 21) sont conçues comme tablettes, plateaux de rangement et/ou marchepieds.
